# EUROPEAN PATENT APPLICATION

(11) **EP 3 136 331 A1**
(43) Date of publication of application: **01.03.2017**
(21) Application number: 14889814.1
(22) Date of filing: 25.04.2014
(51) Int. Cl.: G06Q 30/00

(54) **COMMODITY ANTI-COUNTERFEITING VERIFICATION SYSTEM**

(71) Applicant: Kang, Chia-Ming, Yunlin County, Taiwan 632 (TW)
(72) Inventor: Kang, Chia-Ming, Yunlin County, Taiwan 632 (TW)
(74) Representative: Lang, Christian
(86) International application number: PCT/CN2014/076182
(87) International publication number: WO 2015/161496

(57) **Abstract**

A commodity anti-counterfeiting verification system is provided. A commodity has an verification information group, a manufacturing end has an information processing unit and provides the commodity to an authorized sale end, a consumer end obtains the commodity from the authorized sale end and returns the verification information group to the manufacturing end, after compares the verification information group, the computing unit produces a comparison verification information randomly or non-randomly and transmits a comparison verification information to the information display unit of the authorized sale end and the responding unit of the consumer end, through confirming that the comparison verification information received by the responding unit of the consumer end matches the comparison verification information received by the information display unit of the authorized sale end, the authorized sale end is verified to be authorized and recognized by the manufacturing end.

## Description

### BACKGROUND OF THE INVENTION

### Field of the Invention

The present invention relates to a commodity anti-counterfeiting verification system for verifying if a sale end is authorized by the manufacturing end.

### Description of the Prior Art

To ensure products will not be counterfeited, many manufacturers add anti-counterfeiting measures to their products. In prior arts, such as TWM423879, TWM474206, TW200705286 or TW201331871, a barcode or a character code is stuck on the product, and a consumer connects to a webpage of a manufacturer or uses the application procedure to verify the barcode so as to determine if the product is authentic; however, the barcode can be easily counterfeited, so the anti-counterfeiting effect is limited.

On the other hand, even if the product is authentic, a sale channel selling the product may or may not be authorized by the manufacturing end to sell the product. If the consumer purchases an authentic product through an unauthorized sale channel and there are problems in the product, there may be consumer disputes, and the consumer's right may be damaged. However, so far, only TW201132098 provides a solution to the verification authorization problem. In this prior art, the barcode label is also used for checking and verifying if the product is authorized, but the prior art can only ensure if the product is authorized and cannot ensure that the channel selling the product is authorized.

Therefore, how to build an authorization verification mechanism which can ensure that the consumer's right is protected and is difficult to be counterfeited and faked becomes a priority of the industry.

The present invention has arisen to mitigate and/or obviate the afore-described disadvantages.

### SUMMARY OF THE INVENTION

The major object of the present invention is to provide a commodity anti-counterfeiting verification system which allows a user to verify if a commodity s/he purchased is sold by a sale end which is legally authorized by a manufacturing end.

To achieve the above and other objects, a commodity anti-counterfeiting verification system is provided, including a manufacturing end, manufacturing a commodity, the commodity having a verification information group, the verification information group including a commodity information and an authorized identity verification information, the manufacturing end having an information processing unit, the information processing unit at least including a computing unit and a saving unit, the saving unit being for saving the verification information group; at least one authorized sale end, the manufacturing end providing the commodity to the authorized sale end, the authorized sale end having an information display unit, the authorized identity verification information being for identifying an identity of the authorized sale end; a consumer end, the consumer end obtaining a commodity from the authorized sale end, the consumer end returning the commodity information and the authorized identity verification information through a responding unit to the information processing unit of the manufacturing end, the information processing unit comparing a combination of the commodity information and the authorized identity verification information received with the verification information group saved in the saving unit to determine if the combination of the commodity information and the authorized identity verification information received and the verification information group are matched, when matched, the computing unit produces a comparison verification information randomly or non-randomly, and based on the authorized sale end directed by the authorized identity verification information, the computing unit transmits the comparison verification information to the information display unit of the authorized sale end and the responding unit of the consumer end, through confirming that the comparison verification information received by the responding unit of the consumer end matches the comparison verification information received by the information display unit of the authorized sale end, the authorized sale end is verified to be authorized and recognized by the manufacturing end.

Preferably, when the verification information group of the manufacturing end receives the commodity information and the authorized identity verification information returned by the responding unit of the consumer end, the computing unit not only returns the comparison verification information to the consumer end but also returns a sale end identity explanation information to the consumer end so as to help the consumer end determine if the comparison verification information matches the sale end identity explanation information.

Preferably, the computing unit not only returns the comparison verification information to the consumer end and the authorized sale end but also returns a returning time information to the consumer end and the authorized sale end to help the consumer end and the authorized sale end compare the comparison verification information and the returning time information.

Preferably, the authorized sale end is a physical store.

Preferably, the authorized sale end is an online shopping website.

Preferably, the responding unit of the consumer end includes an electronic device and a responsive application procedure, the responsive application procedure is recognized by the manufacturing end and installed in the electronic device, the consumer end transmits the commodity information and the authorized identity verification information through the responsive application procedure, through the electronic device and to the manufacturing end, and the comparison verification information which is transmitted by the computing unit of the manufacturing end to the consumer end passes through the responsive application procedure and is displayed on the electronic device.

Preferably, the commodity information on the commodity is selected from the group consisting of a 2D barcode, a barcode, a character code, and a combination thereof.

Preferably, the authorized identity verification information on the commodity is selected from the group consisting of a 2D barcode, a barcode, a character code, and a combination thereof.

Preferably, the comparison verification information is a set of character code which is randomly produced.

Through the present invention, a consumer can verify if a purchasing source is a seller legally authorized by a manufacturer when purchasing the commodity, and the present invention is difficult to be counterfeited.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a block diagram showing a structure of the present invention;
Fig. 2 is a drawing showing a commodity of the present invention;
Fig. 3 is a drawing showing a responding unit returning a verification information group of the present invention;
Fig. 4 is a drawing showing the responding unit receiving a comparison verification information of the present invention;
Fig. 5 is a drawing showing an information display unit receiving the comparison verification information of the present invention; and
Fig. 6 is a drawing showing a responsive application procedure of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

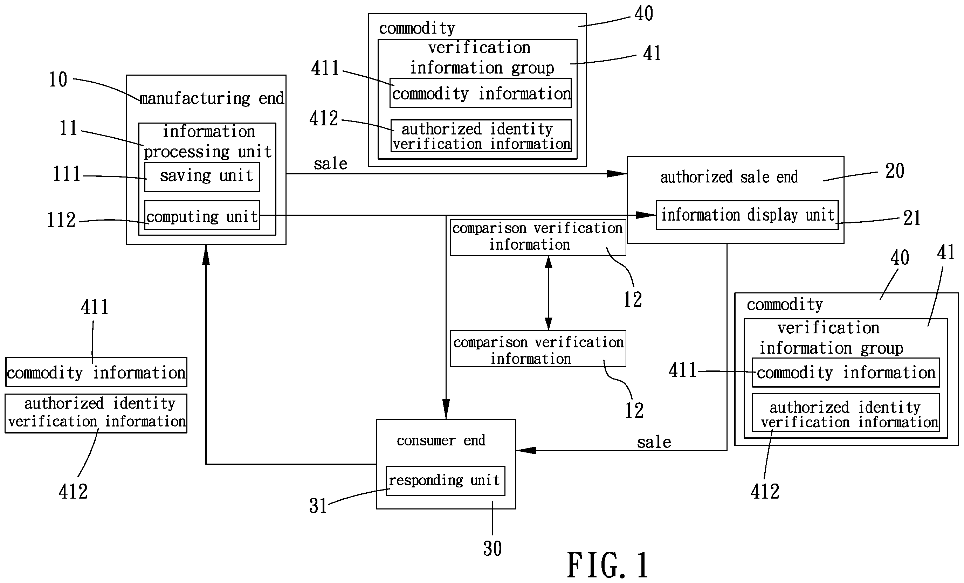

Please refer to Figs. 1 to 4 for a commodity anti-counterfeiting verification system of the present invention, including a manufacturing end 10, at least one authorized sale end 20 and a consumer end 30.

The manufacturing end 10 is a manufacturer which manufactures at least one commodity 40, the commodity 40 has a verification information group 41, and the verification information group 41 includes a commodity information 411 and an authorized identity verification information 412. In addition, the manufacturing end 10 has an information processing unit 11, the information processing unit 11 at least includes a computing unit 112 and a saving unit 111, and the saving unit 111 is for saving the verification information group 41. More specifically, the verification information group 41 may be a label or a tag which is for being arranged on the commodity 40, and the commodity information 411 and the authorized identity verification information 412 may be respectively shown in the forms of a 2D barcode, a barcode or a character code. In this embodiment, the commodity information 411 is shown as a 2D barcode (QR code) printed on a label, and the saving unit 111 saves the commodity information 411 and the authorized identity verification information 412 as well as a combination of the commodity information 411 and the authorized identity verification information 412.

The manufacturing end 10 provides the commodity 40 which has gone through a legal authorization procedure or has been legally recognized to the authorized sale end 20, the authorized identity verification information 412 is for identifying an identity of the authorized sale end 20, and the authorized sale end 20 has an information display unit 21. More specifically, the authorized sale end 20 may be a physical store or a shopping website, and the authorized identity verification information 412 corresponded has a unique identification. That is, even if a plurality of authorized sale ends respectively obtain the same type of the commodities from the manufacturing end 10, the authorized identity verification information marked on the commodities are different. On the other hand, the information display unit 21 may include a computer, a cashier system or a mobile communication device, and the information display unit 21 is connected to the manufacturing end 10 through the internet or other similar ways so as to receive information from the manufacturing end 10.

The consumer end 30 obtains or purchases a commodity from the authorized sale end 20, the consumer end 30 returns the commodity information 411 and the authorized identity verification information 412 through a responding unit 31 to the information processing unit 11 of the manufacturing end 10, the information processing unit 11 compares a combination of the commodity information 411 and the authorized identity verification information 412 received with the verification information group 41 saved in the saving unit 111 to determine if the combination of the commodity information 411 and the authorized identity verification information 412 received and the verification information group 41 are matched, when matched, the computing unit 112 produces a comparison verification information 12 randomly or non-randomly, and based on the authorized sale end 20 directed by the authorized identity verification information 412, the computing unit 112 transmits the comparison verification information 12 to the information display unit 21 of the authorized sale end 20 and the responding unit 31 of the consumer end 30, and through confirming that the comparison verification information 12 received by the responding unit 31 of the consumer end 30 matches the comparison verification information 12 received by the information display unit 21 of the authorized sale end 20, the authorized sale end 20 is verified to be authorized and recognized by the manufacturing end 10. More specifically, the consumer end 30 may be a consumer having a responding unit 31, the responding unit 31 may include an electronic device 311 (for example, a mobile phone, a tablet or a personal computer) and a responsive application procedure 312, the responsive application procedure 312 is recognized by the manufacturing end 10 and installed in the electronic device 311 (the responsive application procedure 312 may be published by the manufacturing end 10 on the internet for the consumer end 30 to download and install), the consumer end 30 actually visits the physical store or browse the shopping website to purchase the commodity from the authorized sale end 20, the consumer end 30 transmits the commodity information 411 and the authorized identity verification information 412 through the responsive application procedure 312, through the electronic device 311 and to the manufacturing end 10, and the comparison verification information 12 which is transmitted by the computing unit 112 of the manufacturing end 10 to the consumer end 30 passes through the responsive application procedure 312 and is displayed on the electronic device 311.

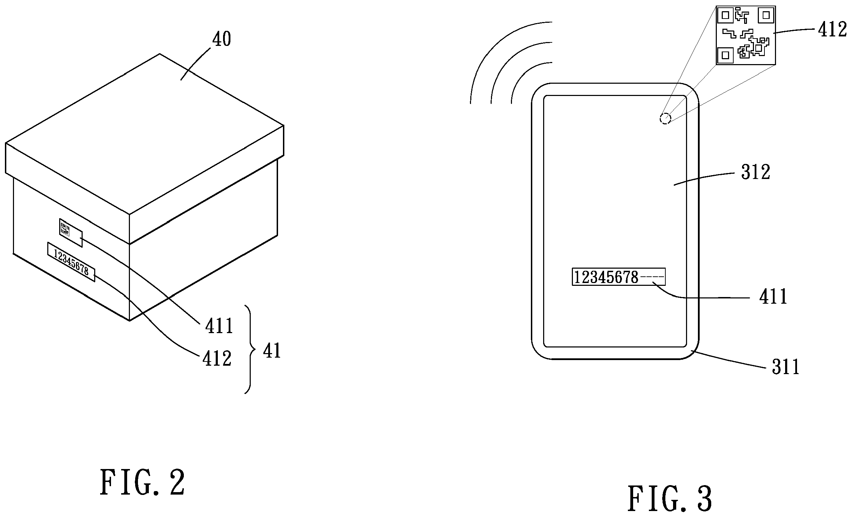

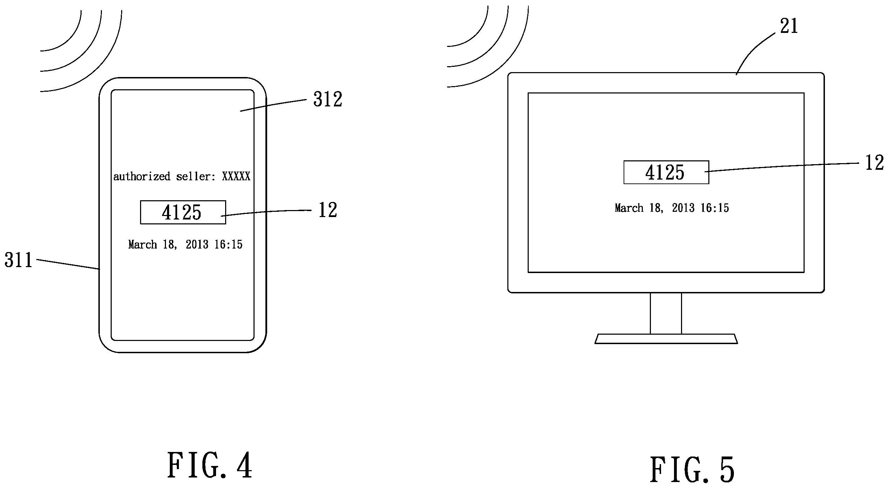

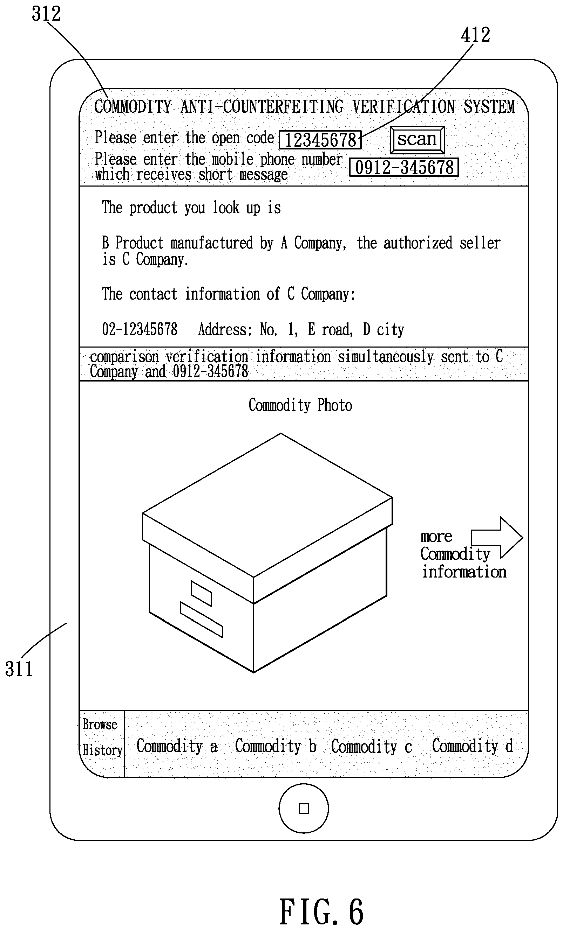

In this embodiment, the consumer can activate the responsive application procedure 312 through the electronic device 311, photograph or read the 2D barcode of the commodity information 411 via a camera of the electronic device 311, enter the character code of the authorized identity verification information 412 in the responsive application procedure 312, and transmit the 2D barcode and the character code through the responsive application procedure 312 to the information processing unit 11 of the manufacturing end 10 (as shown in Fig. 3). After the information processing unit 11 receives the information transmitted by the consumer end 30, the information processing unit 11 compares the information transmitted by the consumer end 30 with the verification information group saved in the saving unit 111 to ensure that the commodity information 411 and the authorized identity verification information 412 are correct, the computing unit 112 identifies an identity of the authorized sale end 20 based on the authorized identity verification information 412 received, produces a comparison verification information 12 (a character code) randomly or non-randomly and transmits the comparison verification information 12 to the responsive application procedure 312 of the consumer end 30 and the information display unit 21 of the authorized sale end 20. At this moment, the responsive application procedure 312 of the consumer end 30 shows and signals the comparison verification information 12 on the electronic device 311 (as shown in Fig. 4), and the information display unit 21 of the authorized sale end 20 also shows the comparison verification information 12 on a screen so that the consumer end 30 can make sure if the authorized sale 20 is a channel authorized by the manufacturing end 10 through comparing the comparison verification information 12 on the electronic device 311 and the comparison verification information 12 on the information display unit 21. In addition, when the verification information group 41 of the manufacturing end 10 receives the commodity information 411 and the authorized identity verification information 412 returned by the responding unit 31 of the consumer end 30, and the computing unit 112 not only returns the comparison verification information 12 to the consumer end 30 but also returns a sale end identity explanation information (for example, a name, an address, a phone number, or a website of the authorized sale end 20) to the consumer end 30 so as to help the consumer end 30 determine if the comparison verification information 12 matches the sale end identity explanation information. Moreover, the computing unit 112 may further returns a returning time information to the consumer end 30 and the authorized sale end 20 to help the consumer end 30 and the authorized sale end 20 compare the comparison verification information 12 and the returning time information. Please refer to Fig. 6 for an actual practice of the present invention, the consumer can enter the authorized identity verification information 412 and scan the commodity information during the responsive application procedure 312, and after the authorized identity verification information 412 and the commodity information are transmitted to the manufacturing end along with a mobile phone number, the manufacturing end returns a basic information, a commodity photo and other information to the authorized sale end and transmits the comparison verification information to the mobile phone number that the consumer entered and the authorized sale end for comparison.

In other embodiments, the authorized sale end is an online shopping channel, the information display unit is the webpage, and the comparison verification information returned by the manufacturing end can be updated and immediately displayed on the webpage for the consumer end to check and compare.

It is to be noted that the consumer cannot conduct a verification process after the consumer purchases the commodity, but the consumer can conduct the verification process before purchasing the commodity so as to protect his/her own right.

In the main embodiment, the electronic device installed with the responsive application procedure serves as the responding unit; however, in other embodiments, the responding unit may only include an electronic device (for example, a smart phone, a tablet or a personal computer) which is connected to the internet, the responding unit is connected to a specific webpage (different said commodity information have different URLs or codes) of the manufacturing end through reading the commodity information (for example, a 2D code), and the consumer end enters the authorized identity verification information on the webpage so that the manufacturing end receives the commodity information and the authorized identity verification information at the same time and compares and calculates the commodity information and the authorized identity verification information. The responding unit may also include a mobile phone SMS system, an email system or a communication application system; that is, the consumer end can receives the information returned by the manufacturing end through SMS, email or application.

However, in a hypothesis that after the manufacturing end compares the verification information group returned to the manufacturing end and finds that the verification information group does not match the information saved in the saving unit, the manufacturing end returns following comparison results to the responding unit of the consumer end: a. both the commodity information or the authorized identity verification information do not match the information saved in the saving unit; that is, the manufacturing end does not produce or sell the commodity, and the store is not authorized by the manufacturing end to sell any commodity; b. the commodity information matches the information saved in the saving unit, but the store is not authorized by the manufacturing end to sell any commodity; c. the authorized identity verification information matches the information saved in the saving unit, but the commodity information does not; that is, the store is authorized by the manufacturing end to sell the commodity, but the commodity is not a commodity manufactured by the manufacturing end; d. the commodity information or the authorized identity verification information respectively match the information saved in the saving unit, but the combination of the commodity information or the authorized identity verification information do not match the information saved in the saving unit; that is, the commodity is manufactured by the manufacturing end, and the store is authorized by the manufacturing end to sell the commodity, but the commodity is not in a scope of the commodity that the store is authorized to sell.

Given the above, through the commodity anti-counterfeiting verification system, the consumer can verify if the store is a sale channel authorized by the manufacturer. When the consumer returns the information to the manufacturer, the information goes through the responding mechanism released by the manufacturer and the comparison verification information is sent by the manufacturer, so a reliability of the comparison result is higher. Besides, the store has to show that it receives the comparison verification information which is identical to that of the consumer so as to prove that the store is the authorized seller. In addition, when the information returns to the manufacturer, the manufacturer compares and verifies the combination of the commodity information and the authorized identity verification information. If the information returned does not match the authorized identity verification information saved in a database of the manufacturer (that is, the store is authorized by the manufacturer), but a model or a type of the commodity does not match the authorized identity verification information, the consumer can know that the store is authorized, but the commodity that s/he verifies is not included in the scope of the commodity authorized.

While we have shown and described various embodiments in accordance with the present invention, it should be clear to those skilled in the art that further embodiments may be made without departing from the scope of the present invention.

## Claims

1. A commodity anti-counterfeiting verification system, including:
a manufacturing end (10), manufacturing a commodity (40), the commodity (40) having a verification information group (41), the verification information group (41) including a commodity information (411) and an authorized identity verification information (412), the manufacturing end (10) having an information processing unit (11), the information processing unit (11) at least including a computing unit (112) and a saving unit (111), the saving unit (111) being for saving the verification information group (41);
at least one authorized sale end (20), the manufacturing end (10) providing the commodity (40) to the authorized sale end (20), the authorized sale end (20) having an information display unit (21), the authorized identity verification information (412) being for identifying an identity of the authorized sale end (20);
a consumer end (30), the consumer end (30) obtaining a commodity (40) from the authorized sale end (20), the consumer end (30) returning the commodity information (411) and the authorized identity verification information (412) through a responding unit (31) to the information processing unit (11) of the manufacturing end (10), the information processing unit (11) comparing a combination of the commodity information (411) and the authorized identity verification information (412) received with the verification information group (41) saved in the saving unit (111) to determine if the combination of the commodity information (411) and the authorized identity verification information (412) received and the verification information group (41) are matched, wherein when matched, the computing unit (112) produces a comparison verification information (12) randomly or non-randomly, and based on the authorized sale end (20) directed by the authorized identity verification information (412), the computing unit (112) transmits the comparison verification information (12) to the information display unit (21) of the authorized sale end (20) and the responding unit (31) of the consumer end (30), through confirming that the comparison verification information (12) received by the responding unit (31) of the consumer end (30) matches the comparison verification information (12) received by the information display unit (21) of the authorized sale end (20), the authorized sale end (20) is verified to be authorized and recognized by the manufacturing end (10).

2. The commodity anti-counterfeiting verification system of claim 1, wherein when the verification information group (41) of the manufacturing end (10) receives the commodity information (411) and the authorized identity verification information (412) returned by the responding unit (31) of the consumer end (30), the computing unit (112) not only returns the comparison verification information (12) to the consumer end (30) but also returns a sale end identity explanation information to the consumer end (30) so as to help the consumer end (30) determine if the comparison verification information matches the sale end identity explanation information.

3. The commodity anti-counterfeiting verification system of claim 1, wherein the computing unit (112) not only returns the comparison verification information (12) to the consumer end (30) and the authorized sale end (20) but also returns a returning time information to the consumer end (30) and the authorized sale end (20) to help the consumer end (30) and the authorized sale end (20) compare the comparison verification information and the returning time information.

4. The commodity anti-counterfeiting verification system of claim 1, wherein the authorized sale end (20) is a physical store.

5. The commodity anti-counterfeiting verification system of claim 1, wherein the authorized sale end (20) is an online shopping website.

6. The commodity anti-counterfeiting verification system of claim 1, wherein the responding unit (31) of the consumer end (30) includes an electronic device (311) and a responsive application procedure (312), the responsive application procedure (312) is recognized by the manufacturing end (10) and installed in the electronic device (311), the consumer end (30) transmits the commodity information (411) and the authorized identity verification information (412) through the responsive application procedure (312), through the electronic device (311) and to the manufacturing end (10), and the comparison verification information (12) which is transmitted by the computing unit (112) of the manufacturing end (10) to the consumer end (30) passes through the responsive application procedure (312) and is displayed on the electronic device (311).

7. The commodity anti-counterfeiting verification system of claim 1, wherein the commodity information (411) on the commodity (40) is selected from the group consisting of a 2D barcode, a barcode, a character code, and a combination thereof.

8. The commodity anti-counterfeiting verification system of claim 1, wherein the authorized identity verification information (412) on the commodity (40) is selected from the group consisting of a 2D barcode, a barcode, a character code, and a combination thereof.

9. The commodity anti-counterfeiting verification system of claim 1, wherein the comparison verification information (12) is a set of character codes which is randomly produced.
